# EUROPEAN PATENT APPLICATION

(11) **EP 1 122 920 A1**
(43) Date of publication of application: **08.08.2001**
(21) Application number: 00102129.4
(22) Date of filing: 04.02.2000
(51) Int. Cl.: H04L 12/64, H04J 3/06

(54) **Method and means for transmitting data**

(71) Applicant: Brandt, Ronald, 85386 Eching (DE); Kirkitadse, Christofor, 82166 Gräfelfing (DE); Spires, Robin-Keith, 82031 Grünwald (DE)
(72) Inventor: Brandt, Ronald, 85386 Eching (DE); Kirkitadse, Christofor, 82166 Gräfelfing (DE); Spires, Robin-Keith, 82031 Grünwald (DE)
(74) Representative: Schöndorf, Jürgen

(57) **Abstract**

The invention proposes a method for establishing a synchronous data communication over the internet or an intranet. The packetized data contain various classes of routing and data protocol elements thereby creating processing tables. The communication is started with an initiating TCP/IP address. An initiator sends in return a handshake to proceed and thereby establishes a synchronous internet conduit for data transport.

## Description

### Prior art:

### Discussion of the current Technology

The internet today has the single ability to act as an asynchronous data packet conduit, sending and receiving pre- and or post-processed data. The internet does not have the ability (through protocols) to act in a synchronous manner in the sending and receiving of data packets. No method exists to utilize the internet as a medium for distributed data basing or as a conduit to share / synchronize distributed data bases, other than downloading a data base for post-processing and then up-loading the resulting delta (post-processed) data base.

### Technical Problem

No method is in place to synchronize data transmitted over the internet. No method exists for coordinating various data packets sent over the internet into a set of data containing more than one internet protocol. There is currently no possibility of utilizing "Packetized" data sets as means of synchronizing internet data.

It is an object of the invention to propose a possibility to transmit and receive data in a synchronous manner over the internet or an intranet.

For achieving this object the invention proposes a method with the features of the claim 1, a means with the features of claim 6 and a protocol with the features of claim 7. The wording of the claims and the wording of the abstract is included by reference into the specification.

### Solution for the Technical Problem

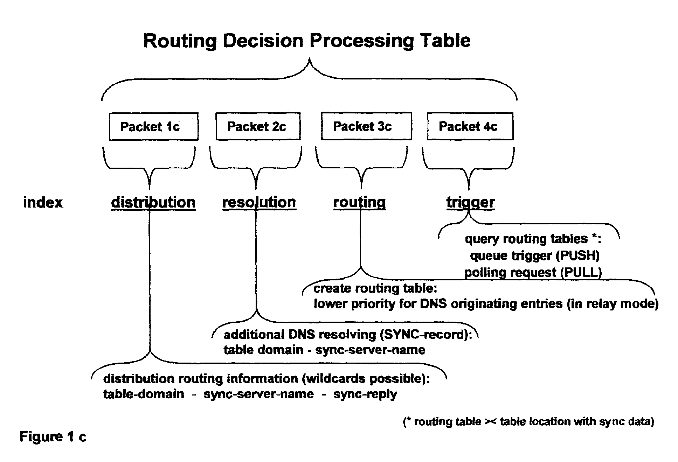

Through a ***"synchronous scheduling transport protocol" (SSTP)*,** "packetized" data sets can be processed in "real-time" at a speed relative to the actual speed of the internet data transmission ***(see figure 1a).*** The "packetized" data sets can be pre-defined to contain various classes of routing and data protocol elements thereby creating ***"processing tables".*** The tables are utilized as a data-stack with an index. Real-time is a relative measurement of internet response time, connection speed and size of the data packet.

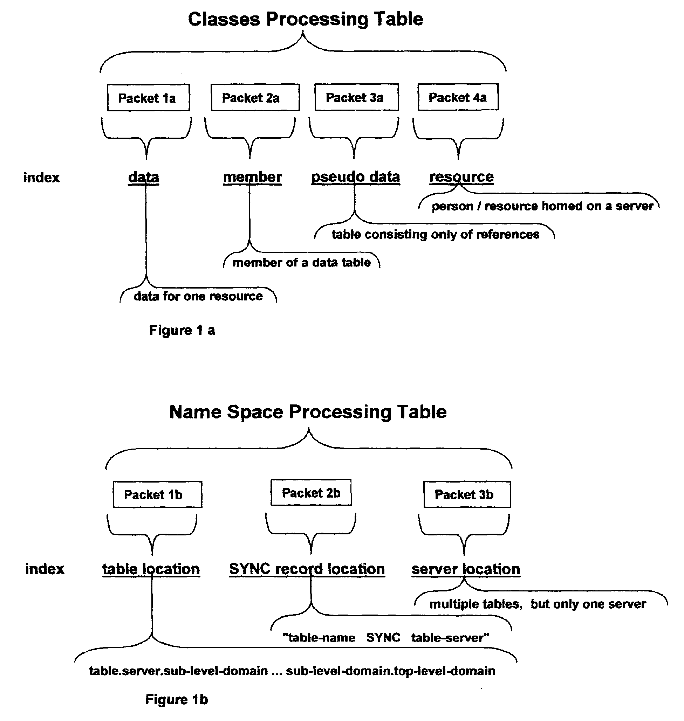

The data-stack also contains the "physical" locations of ***"processing tables"*** within the DNS naming convention which are used by the ***"Synchronizer" (see figure 1b).***

The ***"Synchronizer"*** contains "response" information that triggers an immediate "handshake" to the initiating resource using another element of the ***"synchronous scheduling transport protocol"*** called the ***"Initiator".***

The ***"Initiator"*** has its own ***"processing*** *tables"* which contain the ***"response communication protocol"* (*RCP*)** for the initiating "packetized" data set ***(see figure 1c).***

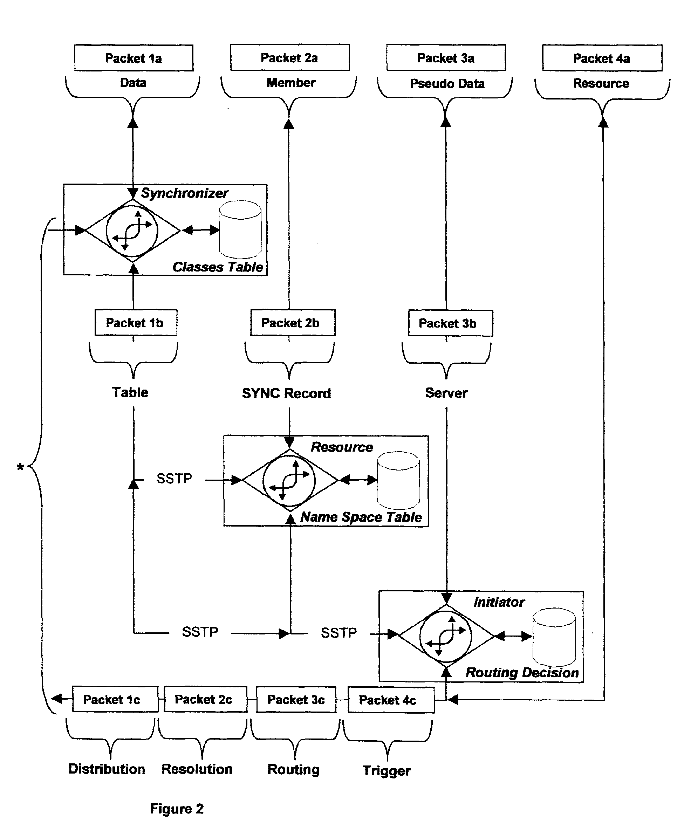

Utilizing the stored ***RCP****,* the *"****Initiator****"* sends an immediate response to the initiating TCP/IP address which in return sends a "handshake" to proceed, thereby establishing a ***"synchronous internet conduit" (SIC)*** for data transport. ***(see figure 2)***

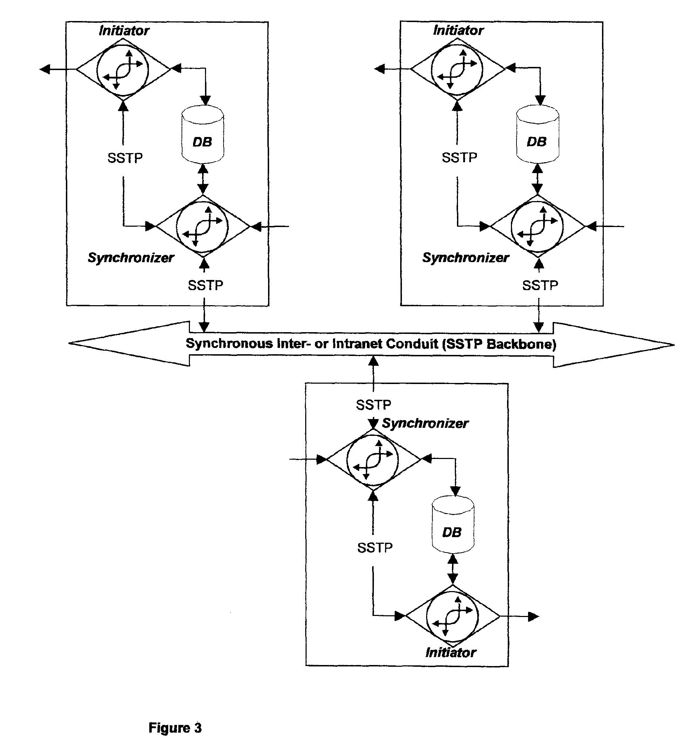

With SSTP it is possible to utilize "Packetized" data set to implement a synchronous protocol within the confines of the present Internet topology. Further, it is possible to synchronize between distributed processes, data bases or networks thereby creating virtual synchronous systems that have multiple physical locations but act as a single entity ***(see figure 3).***

### Advantages

Synchronous packetized data transfers are possible via the SIC. The SIC also allows for virtual distributed data basing, "real-time"¹⁾ scheduling verification and message forwarding.
Distributed Customer Data can be synchronized in "real-time"¹⁾ with sales and service inquiries performed over the Internet or within a corporate network (Intranet). This allows the possibility of building distributed Inter- or Intranet Customer Call Centers.
Synchronous Computing can also be attained though virtual distributed data processing centers.
Synchronized distributed WANs (Internet) and LANs (Intranets) can be correlated to create one virtual WAN or LAN. This allows the possibility of cheap corporate networks over the internet.

### Variations

Synchronized Inter- / Intranet Scheduling Center.
Synchronized Inter- / Intranet Customer Call Center.
Synchronized Inter- / Intranet Messaging Center
Synchronized "real-time"¹⁾ Shared Distributed Data Base.
Virtual (non-"hard" connected) closed networks
Virtual filtered or blocked data bases
Synchronized Search Engines
Synchronized Advertising Engines

Short description of the drawings:
Fig. 1a shows the classes data-stack of the protocol proposed by the invention;
Fig. 1b shows the name space data-stack as used by the invention;
Fig. 1c shows the routing decision data-stack;
Fig. 2 shows the establishing of an synchronous internet conduit as proposed by the invention;
Fig.3 shows an example of an synchronous network comprising three participants;
Fig. 4 shows a polling by client resource;
Fig. 5 shows a sending by server resource.

Fig. 1a shows a data stack comprising 4 data packets. Packet 1a contains data for one resource, packet 2a contains members of a data table. Packet 3a contains pseudo data, namely a table consisting only of references. Packet 4a contains resource data, namely data concerning a person or resource homed on a server.

Fig. 1b shows a data stack creating a name space processing table. These data contain the "physical" locations of processing tables within the DNS naming convention which are used by the synchromizer. The synchronizer contains response information that triggers an immediate handshake to the initiating resource using another element of the synchronous scheduling transport protocol proposed by the invention called the initiator. The packet 1b contains the table location, the packet 2b contains the SYNC record location and the packet 3b contains the server location, namely multiple tables but only one server.

Fig. 1c shows the initiator RCP routing decision data stack. The initiator has its own processing tables which contain the response communication protocol (RCP) for the initiating packetized data set. Packet 1c contains distribution routing information: table domain - sync-server-name - sync reply. Packet 2c contains additional DNS resolving (SYNC - record): table domain - sync-server-name. Packet 3c contains create routing table: lower priority for DNS originating entries (in relay mode). Packet 4c contains trigger information: query routing tables: queue trigger and polling request.

Utilizing the stored RCP, the initiator means sends an immediate response to the initiating TCP/IP address. This address sends in return a handshake to proceed. By this a synchronous internet conduit for data transport is established. This is shown in detail in Figure 2. Here the various interdependencies of the elements of the method of the invention are shown.

Fig. 3 shows an example of a synchronous network with 3 resources interconnected. Each resource has an initiator means, a synchronizer means and a database. With the method of the invention it is possible to utilize packetized data sets to implement a synchronous protocol within the confines of the present internet topology. Further it is possible to synchronize between distributed processes, data bases or networks thereby creating virtual synchronous systems that have multiple physical locations but act as a single entity.

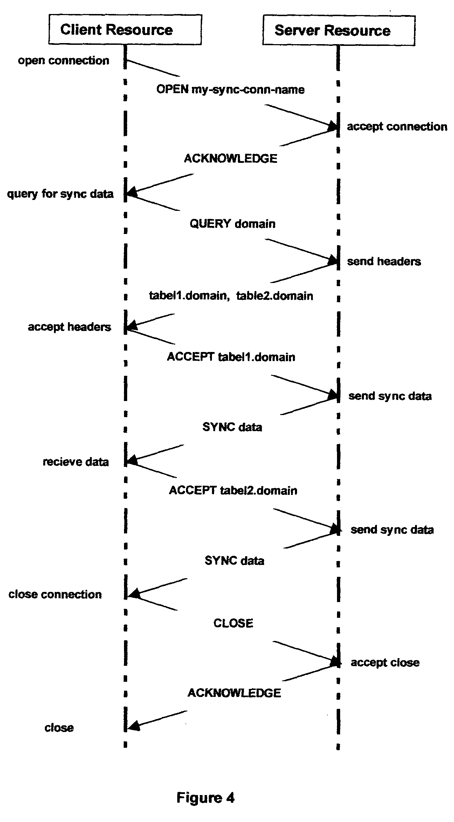

Fig. 4 shows a polling by client resource (pull). The client side sync triggering of polling operations greatly reduces the reply duration by making a real-time server side sync data handshake available. The single steps can be seen in fig. 4.

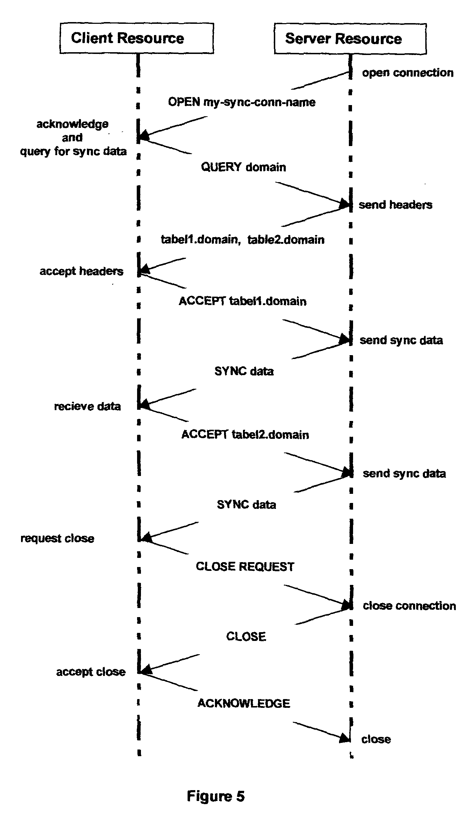

Fig. 5 shows a sending operation by a server resource. The server side sending or push operations allow the client to acknowledge an "open connection request" and triggers a query for a SYNC data handshake from the sending server.

## Claims

1. Method for transmitting and/or receiving data in a synchronous manner over the internet/intranet, in which a protocol is used that comprises an initiating means, for initiating and establishing a conduit, and a synchronizing means.

2. Method according to claim 1, according to which the data are transmitted in a packetized manner.

3. Method according to claim 1 or 2, wherein the data packets contain classes processing tables.

4. Method according to one of the preceding claims, wherein the data packets contain name space processing tables.

5. Method according to one of the preceding claims, wherein the data packets comprise routing decision processing tables.

6. Means for transmitting and/or receiving data in a synchronous manner over the internet/intranet according to which data packets are transmitted comprising various classes of routing and data protocol elements in a predefined manner, which are used as a data-stack with an index.

7. Protocol for transmitting and/or receiving data packets in a synchronous manner over the internet/intranet according to which the data packets comprise various classes of routing and data protocol elements in a predefined manner, which are used as a data-stack with an index.

8. Protocol according to claim 7, wherein the data-stack comprises classes processing tables.

9. Protocol according to claim 7 or 8, wherein the data-stack contains the locations of processing tables which are used by synchronizing means.

10. Protocol according to one of the claims 7 - 9, wherein the processing tables are name space processing tables.

11. Protocol according to one of the claims 7 - 10, wherein the data-stack comprises routing decision processing tables.

12. Protocol according to one of the claims 7 - 11, wherein processing tables for an initiating means contain a response communication protocol for the initiating data set.

13. Protocol according to one of the claims 7 - 12, wherein the classes processing tables contain at least one packet with data for one resource, at least one member packet with member of a data table, one packet with pseudo data and one resource packet.

14. Protocol according to one of the claims 10 - 13, wherein the name space processing table contains one packet with the table location, one packet with the sync record location and one packet with the server location.

15. Protocol according to one of the claims 11 - 14, wherein the routing decision processing table contains one packet with distribution routing information, one packet with additional DNS resolving data, one routing table with data for creating routing table and one trigger packet.
